# EUROPEAN PATENT APPLICATION

(11) **EP 4 391 666 A1**
(43) Date of publication of application: **26.06.2024**
(21) Application number: 21954181.0
(22) Date of filing: 18.08.2021
(51) Int. Cl.: H04W 56/00, H04W 72/04, H04W 84/12

(54) **TRANSMISSION STATION AND RECEPTION STATION**

(71) Applicant: Nippon Telegraph And Telephone Corporation, Chiyoda-ku Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); SHINOHARA, Shoko, Musashino-shi, Tokyo 180-8585 (JP); OTANI, Hanae, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2021/030175
(87) International publication number: WO 2023/021608

(57) **Abstract**

A transmitting station which is a station that transmits a wireless signal includes a first wireless signal processing unit, a second wireless signal processing unit, and a transmission timing adjustment unit. The first wireless signal processing unit transmits and receives a wireless signal using a first channel. The second wireless signal processing unit transmits and receives a wireless signal using a second channel different from the first channel. The transmission timing adjustment unit adjusts transmission timings of first data and second data on the basis of a first status associated with the first wireless signal processing unit and a second status associated with the second wireless signal processing unit.

## Description

### FIELD

An embodiment relates to a transmitting station and a receiving station.

### BACKGROUND OF THE INVENTION

A wireless local area network (LAN) is known as a wireless system between a transmitting station that transmits a wireless signal and a receiving station that receives a wireless signal, such as a base station and a terminal.

### CITATION LIST

[Non Patent Literature 1] IEEE Std 802.11-2016, "10.22.2 HCF contention based channel access (EDCA)," 7 December 2016

### SUMMARY

### TECHNICAL PROBLEM

An embodiment provides a transmitting station and a receiving station that can improve transmission of data in a case where there is power leakage between a plurality of links when the links attempt to transmit data at the same time.

### SOLUTION TO PROBLEM

In the embodiment, a transmitting station which is a station that transmits a wireless signal includes a first wireless signal processing unit, a second wireless signal processing unit, and a transmission timing adjustment unit. The first wireless signal processing unit transmits and receives a wireless signal using a first channel. The second wireless signal processing unit transmits and receives a wireless signal using a second channel different from the first channel. The transmission timing adjustment unit adjusts transmission timings of first data and second data on the basis of a first status associated with the first wireless signal processing unit and a second status associated with the second wireless signal processing unit.

### ADVANTAGEOUS EFFECTS OF INVENTION

According to the embodiment, it is possible to provide a transmitting station and a receiving station that can improve transmission of data in a case where there is power leakage between a plurality of links when the links transmit data at the same time.

### BRIEF DESCRIPTION OF THE DRAWINGS

Fig. 1 is a diagram illustrating an example of a configuration of a wireless system according to an embodiment.
Fig. 2 is a diagram illustrating a specific example of a format of a MAC frame.
Fig. 3 is a diagram illustrating an example of a configuration of a base station.
Fig. 4 is a diagram illustrating an example of a functional configuration of the base station.
Fig. 5 is a diagram illustrating an example of a configuration of a terminal.
Fig. 6 is a diagram illustrating an example of a functional configuration of the terminal.
Fig. 7 is a diagram illustrating details of a channel access function in the base station.
Fig. 8 is a flowchart illustrating an example of multilink processing in the wireless system according to the embodiment.
Fig. 9 is a diagram illustrating an example of a process of transmitting a wireless signal in the wireless system according to the embodiment.
Fig. 10 is a diagram illustrating a process of adjusting an ACK reply timing in a case where data transmission times based on STA functions are different.
Fig. 11 is a diagram illustrating a process different from Fig. 10, which is a process of adjusting an ACK reply timing in a case where data transmission times based on the STA functions are different.
Fig. 12 is a diagram illustrating a process different from Figs. 10 and 11, which is a process of adjusting an ACK reply timing in a case where data transmission times based on the STA functions are different.
Fig. 13 is a diagram illustrating a modification example of a functional configuration of the base station.
Fig. 14 is a diagram illustrating details of a modification example of a channel access function in the base station.
Fig. 15 is a diagram illustrating an example of a process of transmitting a wireless signal in a wireless system according to a modification example of the embodiment.

### DETAILED DESCRIPTION

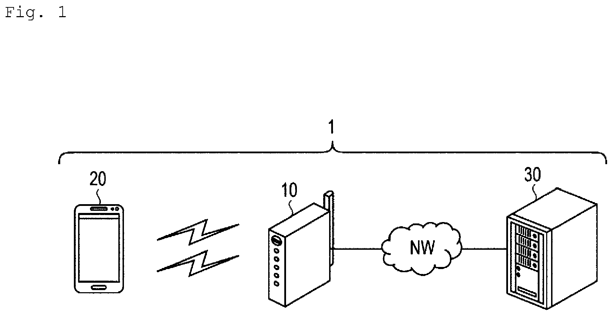

An embodiment will be described below with reference to the accompanying drawings. Fig. 1 shows an example of a configuration of a wireless system 1 according to the embodiment. As shown in Fig. 1, the wireless system 1 includes, for example, a base station 10, a terminal 20, and a server 30.

The base station 10 is connected to a network NW and used as a access point for a wireless LAN. For example, the base station 10 can wirelessly transmit data received from the network NW to the terminal 20. In addition, the base station 10 can be connected to the terminal 20 using one channel or a plurality of different channels. In the present specification, wireless connection using a plurality of different channels between the base station 10 and the terminal 20 is referred to as "multilink." Communication between the base station 10 and the terminal 20 is based on, for example, the IEEE802.11 standard.

The terminal 20 is a wireless terminal such as a smartphone or a tablet PC. The terminal 20 can transmit and receive data to and from the server 30 on the network NW through the base station 10 wirelessly connected thereto. The terminal 20 may be any other electronic device such as a desktop computer or a laptop computer. The terminal 20 need only be able to communicate with at least the base station 10.

The server 30 can hold various types of information, and holds, for example, data of content for the terminal 20. The server 30 is connected to, for example, the network NW in a wired manner and is configured to be able to communicate with the base station 10 through the network NW. The server 30 need only be able to communicate with at least the base station 10. That is, communication between the base station 10 and the server 30 may be wired or wireless.

In the wireless system 1 according to the embodiment, wireless communication between the base station 10 and the terminal 20 is compliant with the IEEE802.11 standard. The IEEE802.11 standard specifies MAC sublayers of the first layer and second layer of the Open Systems Interconnection (OSI) reference model. In the OSI reference model, communication functions are divided into seven layers (first layer: physical layer, second layer: data link layer, third layer: network layer, fourth layer: transport layer, fifth layer: session layer, sixth layer: presentation layer, and seventh layer: application layer). In addition, the data link layer includes, for example, a logical link control (LLC) layer and a media access control (MAC) layer. In the LLC layer, for example, an LLC packet is formed by adding a destination service access point (DSAP) header, a source service access point (SSAP) header, or the like to data input from a higher-level application. In the MAC layer, for example, a MAC frame is formed by adding a MAC header to an LLC packet. This description will be given with focus on processing of MAC sublayers of the first layer and second layer specified by the IEEE802.11 standard, and processing of other layers will not be described.

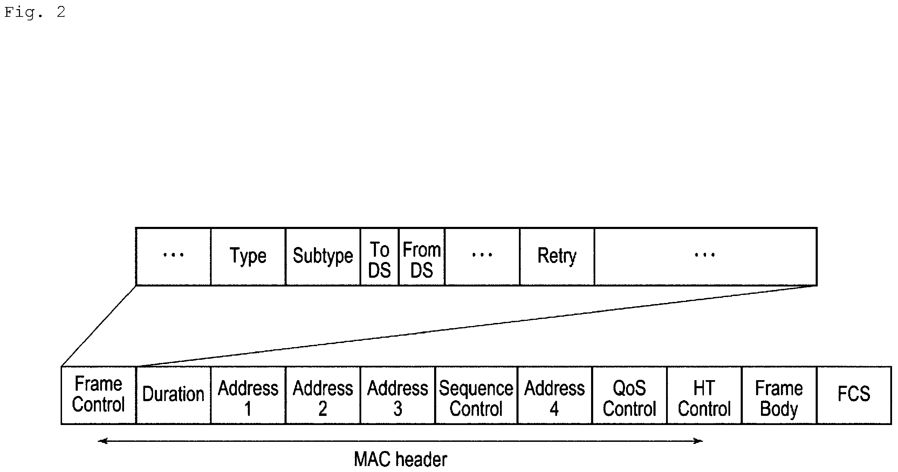

Fig. 2 shows a specific example of the format of a MAC frame used in communication between the base station 10 and the terminal 20 in the wireless system 1 according to the embodiment. As shown in Fig. 2, examples of fields included in the MAC frame include a Frame Control field, a Duration field, an Address 1 field, an Address 2 field, an Address 3 field, a Sequence Control field, an Address 4 field, a QoS Control field, an HT Control field, a Frame Body field, and a Frame Check Sequence (FCS) field. These fields may or may not be included depending on the types of wireless frame.

The Frame Control field to the HT control field correspond to a MAC header. The Frame Body field corresponds to a MAC payload. The FCS field stores an error detection code for the MAC header and the Frame Body field. The FCS field is used to determine the presence or absence of errors in the MAC frame.

The Frame Control field includes various types of control information, for example, Type value, Subtype value, To Distribution System (DS) value, From DS value, and Retry value.

The Type value indicates whether the MAC frame is a management frame, a control frame, or a data frame. The Subtype value indicates the frame type of the MAC frame when used in combination with the Type value. For example, "00/1000 (Type value/Subtype value)" indicates that the MAC frame is a beacon signal. In addition, "00/0100 (Type value/Subtype value)" indicates that the MAC frame is a probe request. In addition, "00/0101 (Type value/Subtype value)" indicates that the MAC frame is a probe response.

The To DS value and the From DS value have different meanings depending on their combination. For example, when the MAC frame is a data frame, the To DS value "0" indicates that the receiving station is a terminal, and " 1" indicates that the receiving station is a base station. In addition, when the MAC frame is a data frame, the From DS value "0" indicates that the transmitting station is a terminal, and "1" indicates that the transmitting station is a base station. On the other hand, when the MAC frame is a management frame or a control frame, the To DS value and the From DS value are fixed to, for example, "0."

The Retry value indicates whether the MAC frame is a retransmission frame. For example, a Retry value of "0" indicates that the MAC frame is not a retransmission frame, that is, an original MAC frame. On the other hand, a Retry value of "1" indicates that the MAC frame is a retransmission frame.

The Duration field indicates a scheduled period of use of a wireless circuit. The Address field indicates BSSID, transmission source MAC address, destination MAC address, sender terminal address, receiver terminal address, and the like. The number of Address fields used varies depending on the frame type. The Sequence Control field indicates the sequence number of the MAC frame and the fragment number for the fragment. The QoS Control field is used for a quality of service (QoS) function in the MAC frame. The QoS Control field may include a traffic identifier (TID) subfield. The HT Control field is a Control field for a high-throughput function. The Frame Body field includes information according to the frame type. For example, transmission data is stored in the Frame Body field in a case where the frame type is a data frame.

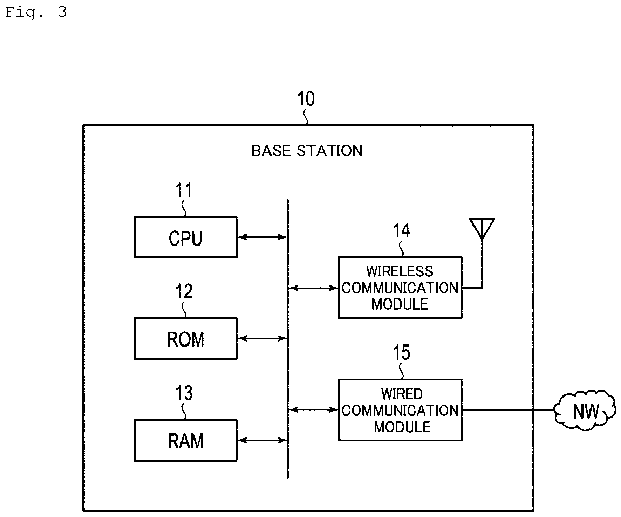

Fig. 3 shows an example of a configuration of the base station 10. As shown in Fig. 3, the base station 10 includes, for example, a central processing unit (CPU) 11, a read only memory (ROM) 12, a random access memory (RAM) 13, a wireless communication module 14, and a wired communication module 15.

The CPU 11 is a circuit capable of executing various programs and controls the overall operation of the base station 10. The ROM 12 is a non-volatile semiconductor memory and holds a program, control data, and the like for controlling the base station 10. The RAM 13 is, for example, a volatile semiconductor memory and is used as a work area of the CPU 11. The wireless communication module 14 is a circuit used to transmit and receive data through a wireless signal and is connected to an antenna. In addition, the wireless communication module 14 includes, for example, a plurality of communication modules corresponding to a plurality of frequency bands, respectively. The wired communication module 15 is a circuit used to transmit and receive data through a wired signal and is connected to the network NW.

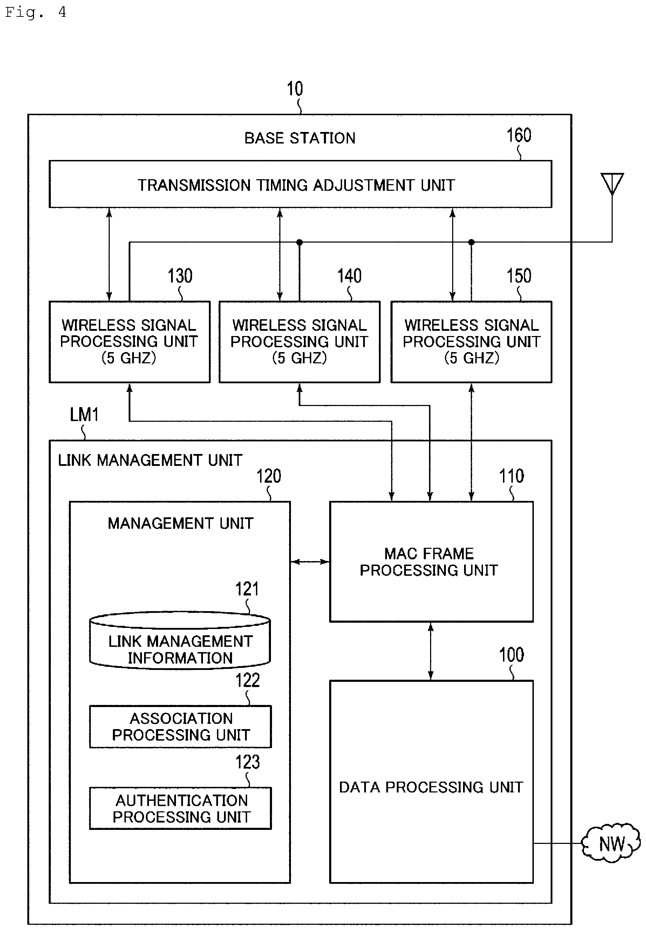

Fig. 4 shows an example of a functional configuration of the base station 10. As shown in Fig. 4, the base station 10 includes, for example, a data processing unit 100, a MAC frame processing unit 110, a management unit 120, the wireless signal processing units 130, 140, and 150, and a transmission timing adjustment unit 160. Processing of the data processing unit 100, the MAC frame processing unit 110, the management unit 120, the wireless signal processing units 130, 140, and 150, and the transmission timing adjustment unit 160 is realized by, for example, the CPU 11 and the wireless communication module 14.

The data processing unit 100 can execute LLC layer processing and higher layer (third layer to seventh layer) processing on input data. For example, the data processing unit 100 outputs data input from the server 30 through the network NW to the MAC frame processing unit 110. In addition, the data processing unit 100 transmits the data input from the MAC frame processing unit 110 to the server 30 through the network NW.

The MAC frame processing unit 110 executes, for example, MAC layer processing on the input data. For example, the MAC frame processing unit 110 generates a MAC frame from data input from the data processing unit 100. In addition, the MAC frame processing unit 110 restores data from a MAC frame input from each of the wireless signal processing units 130, 140, and 150. A process of generating a MAC frame from data and a process of restoring data from a MAC frame may be based on the IEEE802.11 standard.

The management unit 120 manages a link with the terminal 20 on the basis of notifications received from the wireless signal processing units 130, 140, and 150 through the MAC frame processing unit 110. The management unit 120 includes link management information 121. The link management information 121 is stored in, for example, the RAM 13 and includes information on the terminal 20 wirelessly connected to the base station 10. In addition, the management unit 120 includes an association processing unit 122 and an authentication processing unit 123. The association processing unit 122 executes a protocol related to association when receiving a connection request from the terminal 20 through any of the wireless signal processing units 130, 140, and 150. The authentication processing unit 123 executes the protocol related to authentication subsequentially to the connection request. Hereinafter, a set of the data processing unit 100, the MAC frame processing unit 110, and the management unit 120 is referred to as a link management unit LM1 of the base station 10.

Each of the wireless signal processing units 130, 140, and 150 transmits and receives data between the base station 10 and the terminal 20 using wireless communication. For example, each of the wireless signal processing units 130, 140, and 150 adds a preamble, a PHY header, or the like to the MAC frame input from the MAC frame processing unit 110 to create a wireless frame. Each of the wireless signal processing units 130, 140, and 150 then converts the wireless frame into a wireless signal and delivers the wireless signal through the antenna of the base station 10. In addition, each of the wireless signal processing units 130, 140, and 150 converts the wireless signal received through the antenna of the base station 10 into a wireless frame. Each of the wireless signal processing units 130, 140, and 150 then outputs data (for example, MAC frame) included in the wireless frame to the MAC frame processing unit 110.

In this way, each of the wireless signal processing units 130, 140, and 150 can execute, for example, a portion of MAC layer processing and first layer processing on the input data or the wireless signal. For example, the wireless signal processing units 130, 140, and 150 handle a wireless signal of 5 GHz band. The wireless signal processing units 130, 140, and 150 may or may not share the antenna of the base station 10.

The transmission timing adjustment unit 160 adjusts a timing at which data is transmitted from each of the wireless signal processing units 130, 140, and 150. The transmission timing adjustment unit 160 is notified of the status of carrier sense (CS) based on carrier sense executed by each of the wireless signal processing units 130, 140, and 150 from each of the wireless signal processing units 130, 140, and 150. The transmission timing adjustment unit 160 manages the status of carrier sense notified of by each of the wireless signal processing units 130, 140, and 150 as status management information. The carrier sense is a process of detecting the use state of a channel, and involves determining whether the channel is in an unused state (idle state) or in a use state (busy state) as a channel status. The carrier sense may be performed using, for example, clear channel assessment (CCA). Each of the wireless signal processing units 130, 140, and 150 notifies the transmission timing adjustment unit 160 of the status of carrier sense and the scheduled time to acquire the transmission right in a case where an idle state continues due to the carrier sense. The status of carrier sense corresponds to the status of a channel access procedure, for example, the start of the channel access procedure, the acquisition of the transmission right by completion of the channel access procedure, the suspension of the channel access procedure in a case where a busy state is detected, or the like. Each of the wireless signal processing units 130, 140, and 150 notifies the transmission timing adjustment unit 160 of the status of carrier sense on the basis of a change in the status of the carrier sense.

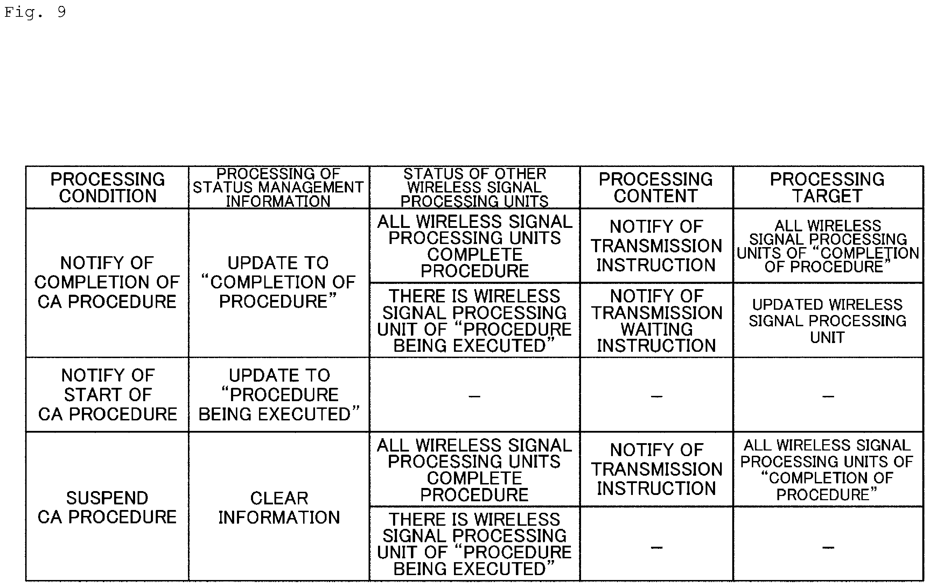

The transmission timing adjustment unit 160 notifies of transmission control information for each of the wireless signal processing units 130, 140, and 150 on the basis of the status of carrier sense of each wireless signal processing unit. The transmission control information is information indicating whether the notified wireless signal processing unit transmits data. The transmission control information is, for example, a transmission instruction for instructing transmission of data and a transmission waiting instruction for instructing waiting for transmission of data. Each of the wireless signal processing units 130, 140, and 150 transmits data when notified of the transmission instruction, and waits for transmission of data when notified of the transmission waiting instruction. The details of the operation of the transmission timing adjustment unit 160 will be described later with reference to Fig. 9.

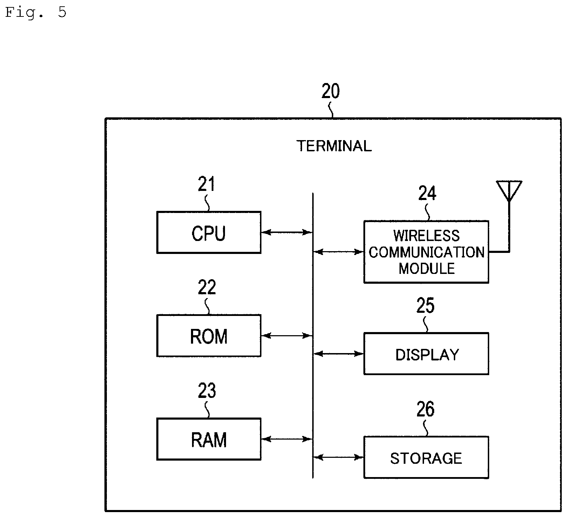

Fig. 5 shows an example of a configuration of the terminal 20. As shown in Fig. 5, the terminal 20 includes, for example, a CPU 21, a ROM 22, a RAM 23, a wireless communication module 24, a display 25, and a storage 26.

The CPU 21 is a circuit capable of executing various programs and controls the overall operation of the terminal 20. The ROM 22 is a non-volatile semiconductor memory and holds a program, control data, and the like for controlling the terminal 20. The RAM 23 is, for example, a volatile semiconductor memory and is used as a work area of the CPU 21. The wireless communication module 24 is a circuit used to transmit and receive data through a wireless signal and is connected to an antenna. In addition, the wireless communication module 24 includes, for example, a plurality of communication modules corresponding to a plurality of frequency bands, respectively. The display 25 displays, for example, a graphical user interface (GUI) and the like corresponding to application software. The display 25 may have a function as an input interface for the terminal 20. The storage 26 is a non-volatile storage device and holds, for example, system software and the like of the terminal 20. The terminal 20 may not include a display.

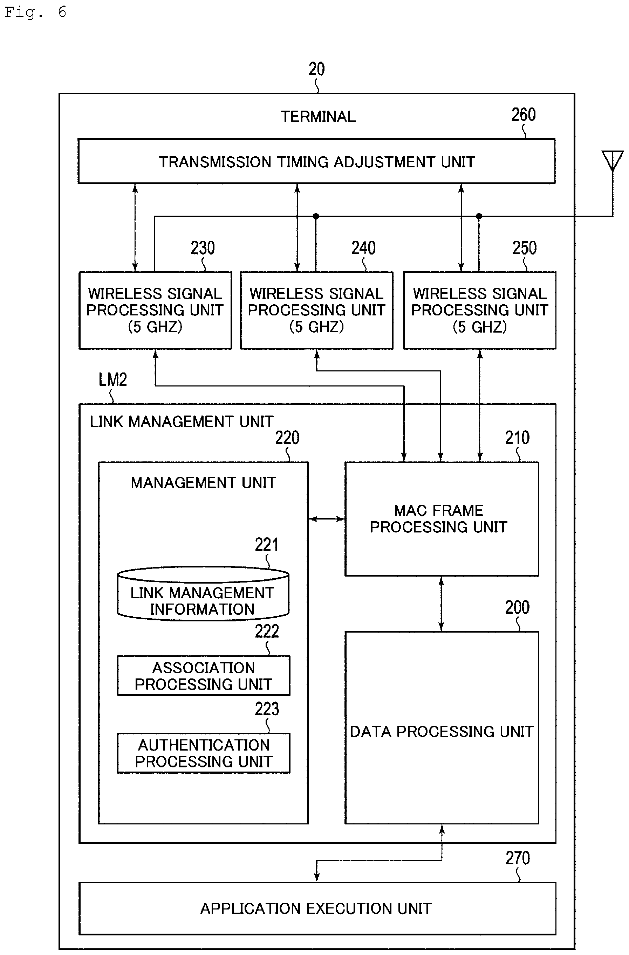

Fig. 6 shows an example of a functional configuration of the terminal 20 included in the wireless system 1 according to the embodiment. As shown in Fig. 6, the terminal 20 includes, for example, a data processing unit 200, a MAC frame processing unit 210, a management unit 220, wireless signal processing units 230, 240, and 250, a transmission timing adjustment unit 260, and an application execution unit 270. Processing of the data processing unit 200, the MAC frame processing unit 210, the management unit 220, the wireless signal processing units 230, 240, and 250, and the transmission timing adjustment unit 260 is realized by, for example, the CPU 21 and the wireless communication module 24. Processing of the application execution unit 270 is realized by, for example, the CPU 21.

The data processing unit 200 can execute LLC layer processing and higher layer (third layer to seventh layer) processing on input data. For example, the data processing unit 200 outputs data input from the application execution unit 270 to the MAC frame processing unit 210. In addition, the data processing unit 200 outputs data input from the MAC frame processing unit 210 to the application execution unit 270.

The MAC frame processing unit 210 executes, for example, MAC layer processing on the input data. The MAC frame processing unit 210 generates a MAC frame from the data input from the data processing unit 200. In addition, the MAC frame processing unit 210 restores data from a MAC frame input from each of the wireless signal processing units 230, 240, and 250. A process of generating a MAC frame from data and a process of restoring data from a MAC frame may be based on the IEEE802.11 standard.

The management unit 220 manages a link with the base station 10 on the basis of notifications received from the wireless signal processing units 230, 240, and 250 through the MAC frame processing unit 210. The management unit 220 includes a link management information 221. The link management information 221 is stored in, for example, the RAM 23 and includes information on the base station 10 wirelessly connected to the terminal 20. In addition, the management unit 220 includes an association processing unit 222 and an authentication processing unit 223. The association processing unit 222 executes a protocol related to association when receiving a connection request from the base station 10 through any of the wireless signal processing units 230, 240, and 250. The authentication processing unit 223 executes the protocol related to authentication subsequentially to the connection request. Hereinafter, a set of the data processing unit 200, the MAC frame processing unit 210 and the management unit 220 is referred to as a link management unit LM2 of the terminal 20.

Each of the wireless signal processing units 230, 240, and 250 transmits and receives data between the base station 10 and the terminal 20 using wireless communication. For example, each of the wireless signal processing units 230, 240, and 250 adds a preamble, a PHY header, or the like to the MAC frame input from the MAC frame processing unit 210 to create a wireless frame. Each of the wireless signal processing units 230, 240, and 250 then converts the wireless frame into a wireless signal and delivers the wireless signal through the antenna of the terminal 20. In addition, each of the wireless signal processing units 230, 240, and 250 converts the wireless signal received through the antenna of the terminal 20 into a wireless frame. Each of the wireless signal processing units 230, 240, and 250 then outputs data (for example, a MAC frame) included in the wireless frame to the MAC frame processing unit 210.

In this way, each of the wireless signal processing units 230, 240, and 250 can execute, for example, a portion of MAC layer processing and first layer processing on the input data or the wireless signal. For example, the wireless signal processing units 230, 240, and 250 handle a wireless signal of 5 GHz band. The wireless signal processing units 230, 240, and 250 may or may not share the antenna of the terminal 20.

The transmission timing adjustment unit 260 adjusts a timing at which data is transmitted from each of the wireless signal processing units 230, 240, and 250. The function of the transmission timing adjustment unit 260 is the same as the function of the transmission timing adjustment unit 160 described above. That is, the transmission timing adjustment unit 260 manages the status of carrier sense notified of by each of the wireless signal processing units 230, 240, and 250. In addition, the transmission timing adjustment unit 260 notifies each wireless signal processing unit of transmission control information of each of the wireless signal processing units 230, 240, and 250 on the basis of the status of carrier sense of each wireless signal processing unit.

The application execution unit 270 executes an application that can use data input from the data processing unit 200. For example, the application execution unit 270 can display information about the application on the display 25. In addition, the application execution unit 270 can operate on the basis of the operation of the input interface.

In the wireless system 1 according to the embodiment described above, the wireless signal processing units 130, 140, and 150 of the base station 10 are configured to be connectable to the wireless signal processing units 230, 240, and 250 of the terminal 20, respectively. That is, the wireless signal processing units 130 and 230, the wireless signal processing units 140 and 240, and the wireless signal processing units 150 and 250 can be wirelessly connected using a 5 GHz band. In the present specification, each wireless signal processing unit may be referred to as an "STA function." That is, the wireless system 1 according to the embodiment has a plurality of STA functions.

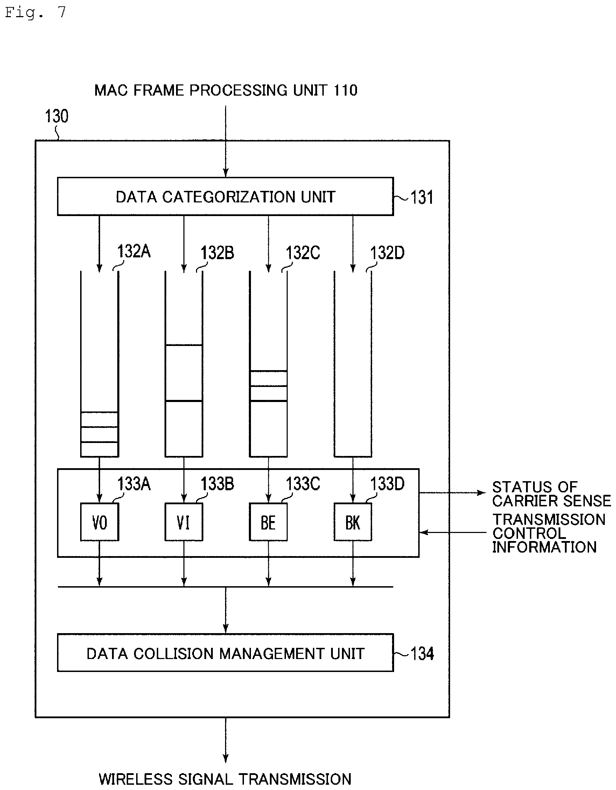

Fig. 7 shows the details of a channel access function in the wireless signal processing unit of the base station 10. In the example of the embodiment, each of the wireless signal processing units 130, 140, and 150 has a channel access function. Fig. 7 shows a channel access function of the wireless signal processing unit 130. The channel access functions of the wireless signal processing units 140 and 150 are the same as the channel access function of the wireless signal processing unit 130. Therefore, the channel access functions of the wireless signal processing units 140 and 150 will not be described. In addition, each of the wireless signal processing units 230, 240, and 250 of the terminal 20 also has a channel access function. The channel access functions of the wireless signal processing units 230, 240, and 250 are also the same as the channel access function of the wireless signal processing unit 130. Therefore, the channel access functions of the wireless signal processing units 230, 240, and 250 will not be described.

As shown in Fig. 7, the channel access function includes, for example, a data categorization unit 131, transmission queues 132A, 132B, 132C, and 132D, CSMA/CA execution units 133A, 133B, 133C, and 133D, and a data collision management unit 134. In the embodiment, for example, the channel access function is realized using enhanced distribution channel access (EDCA).

The data categorization unit 131 categorizes the data of the MAC frame input from the MAC frame processing unit 110 using, for example, TID. The TID is assigned for each application (session) handled by the terminal 20, and represents the type of traffic. As data categories, for example, "VO (Voice)," "VI (Video)," "BE (Best Effort)", and "BK (Background)" are set.

The data categorization unit 131 inputs MAC frames containing categorized data to any of the transmission queues 132A, 132B, 132C, and 132D. Specifically, a MAC frame containing VO data is input to the transmission queue 132A. A MAC frame containing VI data is input to the transmission queue 132B. A MAC frame containing BE data is input to the transmission queue 132C. A MAC frame containing BK data is input to the transmission queue 132D. Each input MAC frame is accumulated in any of the corresponding transmission queues 132A to 132D.

When data is input to any of the transmission queues 132A to 132D, each of the CSMA/CA execution units 133A, 133B, 133C, and 133D executes the channel access procedure and notifies the transmission timing adjustment unit 160 of the start of the channel access procedure as the status of carrier sense. In addition, together with this notification, the CSMA/CA execution units 133A, 133B, 133C, and 133D notify the transmission timing adjustment unit 160 of the estimated time of completion of the channel access procedure. Each of the CSMA/CA execution units 133A, 133B, 133C, and 133D waits for transmission for a time specified by access parameters set in advance, in CSMA/CA, while confirming that there is no wireless signal transmission by another terminal or the like using carrier sense.

When the channel access procedure is completed, each of the CSMA/CA execution units 133A, 133B, 133C, and 133D notifies the transmission timing adjustment unit 160 of the completion of the channel access procedure as the status of carrier sense. After the transmission timing adjustment unit 160 is notified of the status of carrier sense, each of the CSMA/CA execution units 133A, 133B, 133C, and 133D waits for notification of transmission control information from the transmission timing adjustment unit 160. In a case where the channel status enters a busy state while waiting for transmission for the aforementioned specified time, each of the CSMA/CA execution units 133A, 133B, 133C, and 133D suspends the channel access procedure and notifies the transmission timing adjustment unit 160 of the suspension of the channel access procedure as the status of carrier sense.

When the transmission right can be acquired, the CSMA/CA execution units 133A, 133B, 133C, and 133D extract MAC frames from the corresponding transmission queues 132A, 132B, 132C, and 132D, and output the extracted MAC frames to the STA function through the data collision management unit 134. The STA function of the wireless signal processing unit 130 then generates a wireless signal on the basis of the input MAC frame. The wireless signal processing unit 130 transmits the wireless signal on the basis of the transmission control information notified of by the transmission timing adjustment unit 160.

The CSMA/CA execution unit 133A executes CSMA/CA for the MAC frame containing VO data held in the transmission queue 132A. The CSMA/CA execution unit 133B executes CSMA/CA for the MAC frame containing VI data held in the transmission queue 132B. The CSMA/CA execution unit 133C executes CSMA/CA for the MAC frame containing BE data held in the transmission queue 132C. The CSMA/CA execution unit 133D executes CSMA/CA for the MAC frame containing BK data held in the transmission queue 132D.

Meanwhile, in EDCA, the access parameters are allocated such that the transmission of the wireless signal is prioritized in the order of, for example, VO, VI, BE, and BK. The access parameters include, for example, CWmin, CWmax, AIFS, and TXOPLimit. CWmin and CWmax indicate the minimum value and maximum value of a contention window (CW), respectively, which is a transmission waiting time for collision avoidance. Arbitration inter frame space (AIFS) indicates a fixed transmission waiting time set for each access category for collision avoidance control with a priority control function. TXOPLimit indicates the upper limit of transmission opportunity (TXOP) corresponding to the channel occupation time. For example, the transmission queue is more likely to obtain the transmission right as CWmin and CWmax become shorter. The priority of the transmission queue becomes higher as AIFS becomes smaller. The amount of data transmitted with a single transmission right increases as the value of TXOPLimit becomes larger.

The data collision management unit 134 prevents data collision in a case where a plurality of CSMA/CA execution units acquire the transmission right with the same STA function. Specifically, the data collision management unit 134 adjusts the transmission timing of data for which the transmission right has been acquired by the same STA function and of which the categories are different. The data collision management unit 134 transmits the MAC frame containing data of a high-priority category to the STA function. For example, the STA function that has acquired the transmission right through CSMA/CA in the VO transmission queue 132A may acquire the transmission right simultaneously with the STA function that has acquired the transmission right through CSMA/CA in any of the other transmission queues 132B to 132D. In this case, the data collision management unit 134 preferentially transmits the MAC frame stored in the transmission queue 132A to the STA function. Similarly, in other combinations of the transmission queues 132B to 132D, the MAC frames are transmitted in order based on the priority set for the category. This prevents collisions between data for which transmission is allocated to the same STA function.

Next, an example of the operation associated with the multilink of the wireless system 1 according to the embodiment will be described. In the following description, for the purpose of simplifying the description, the base station 10 and the terminal 20 are assumed to establish multilinks with two STA functions STA1 and STA2, respectively.

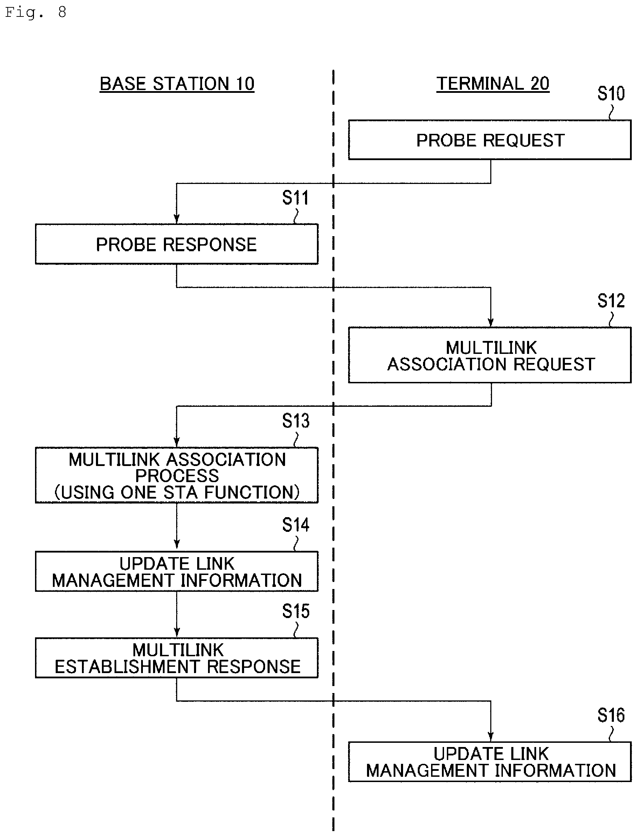

Fig. 8 is a flowchart illustrating an example of multilink processing in the wireless system 1 according to the embodiment. As shown in Fig. 8, in the multilink processing, for example, the processes of steps S10 to S16 are executed in order.

Specifically, first, in the process of step S10, the terminal 20 transmits a probe request to the base station 10. The probe request is a signal for confirming whether the base station 10 is in the vicinity of the terminal 20. The Frame Control field of the probe request contains, for example, "00/0100 (Type value/Subtype value)." When the probe request is received, the base station 10 executes the process of step S11.

In the process of step S11, the base station 10 transmits a probe response to the terminal 20. The probe response is a signal used by the base station 10 to respond to the probe request from the terminal 20. The Frame Control field of the probe response contains, for example, "00/0101 (Type value/Subtype value)." When the probe response is received, the terminal 20 executes the process of step S12.

In the process of step S12, the terminal 20 transmits a multilink association request to the base station 10 through at least one STA function. The multilink association request is a signal for requesting the base station 10 to establish a multilink. For example, the multilink association request is generated by the management unit 220 of the terminal 20. The Frame Control field of the multilink association request contains, for example, "00/0000 (Type value/Subtype value)." When multilink association request is received, the management unit 120 of the base station 10 executes the process of step S13.

In the process of step S13, the management unit 120 of the base station 10 executes a multilink association process using one STA function. Specifically, the base station 10 first executes an association process of the first STA function with the terminal 20. When a wireless connection (link) is established in the first STA function, the management unit 120 of the base station 10 executes an association process of the second STA function using the first STA function in which the link has been established. That is, the STA function in which the link is established is used for the association process of the STA function in which the link is not established. When the association process of at least two STA functions is completed, the base station 10 establishes the multilink and executes the process of step S14.

Meanwhile, when the link is established in the first STA function, the multilink may be established. For example, the base station 10 and the terminal 20 each notify each other of the multilink capability, links to be multilinked, operation parameters in each link, and the like in advance of the association process, so that the association for the multilink can be collectively executed. Specifically, when the first STA function starts the association, the management unit 120 and 220 instruct the establishment of the multilink and designates links and the like to be multilinked. The management unit 120 and 220 then execute the association of each link and manage these links as the multilink.

In the process of step S14, the management unit 120 of the base station 10 updates the link management information 121. Meanwhile, although the process of step S14 is executed after two links are established in the present example, the link management information 121 may be updated each time the link state is updated, or may be updated when the multilink is established. When the multilink is established and the link management information is updated, the base station 10 executes the process of step S15.

In the process of step S15, the base station 10 transmits a multilink establishment response to the terminal 20. The multilink establishment response is a signal used by the base station 10 to respond to a multilink request from the terminal 20. The Frame Control field of the multilink establishment response contains, for example, "00/0001 (Type value/Subtype value)." The management unit 220 of the terminal 20 recognizes that the multilink with the base station 10 has been established on the basis of the reception of the multilink establishment response. When the multilink establishment response is received, the terminal 20 executes the process of step S16.

In the process of step S 16, the management unit 220 of the terminal 20 updates the link management information 221. That is, the terminal 20 records the establishment of the multilink with the base station 10 in the link management information 221. This completes the setup of the multilink in the wireless system 1 according to the embodiment, wireless communication using the multilink becomes possible between the base station 10 and the terminal 20.

Fig. 9 is a table showing an example of a process of transmitting a wireless signal in the wireless system according to the embodiment. Hereinafter, the base station 10 is assumed to be a transmitting station that transmits a wireless signal. In Fig. 9, the processing condition is a condition serving as a trigger for the transmission timing adjustment unit 160 to execute a predetermined process. The processing of the status management information is the content of processing executed by the transmission timing adjustment unit 160 on the status management information of each wireless signal processing unit. The status of other wireless signal processing units is status management information of wireless signal processing units other than the wireless signal processing unit that has notified the transmission timing adjustment unit 160 of the status of carrier sense. The processing content is the content pf a predetermined process executed by the transmission timing adjustment unit 160. The processing target is a target on which the transmission timing adjustment unit 160 executes a predetermined process. That is, the transmission timing adjustment unit 160 executes the processing content on the processing target on the basis of the processing condition being satisfied.

In the present embodiment, any of the wireless signal processing units 130, 140, and 150 notifies the transmission timing adjustment unit 160 of the status of carrier sense (CS). When the transmission timing adjustment unit 160 is notified of the completion of the channel access (CA) procedure as the status of carrier sense, the transmission timing adjustment unit 160 updates the status management information of the wireless signal processing unit that has notified of the status of carrier sense to content indicating the completion of the channel access procedure. The transmission timing adjustment unit 160 confirms the status management information of wireless signal processing units other than the wireless signal processing unit that has notified of the status of carrier sense (other wireless signal processing units). At this time, in a case where the status management information of all other wireless signal processing units is content indicating the completion of the CA procedure, the transmission timing adjustment unit 160 notifies all other wireless signal processing units of a transmission instruction as the transmission control information. In a case where the status management information of at least one other wireless signal processing unit is content indicating the CA procedure is being executed, the transmission timing adjustment unit 160 notifies the wireless signal processing unit that has updated the status management information of a transmission waiting instruction as the transmission control information.

In a case where the transmission timing adjustment unit 160 is notified of the start of the channel access procedure as the status of carrier sense, the transmission timing adjustment unit 160 updates the status management information of the wireless signal processing unit that has notified of the status of carrier sense to content indicating that the channel access procedure is being executed. At this time, the transmission timing adjustment unit 160 does not execute processing related to the status management information of other wireless signal processing units. For example, the transmission timing adjustment unit 160 does not execute special processing on other wireless signal processing units.

In a case where the transmission timing adjustment unit 160 is notified of the suspension of the channel access procedure as the status of carrier sense, the transmission timing adjustment unit 160 clears the status management information of the wireless signal processing unit that has notified of the status of carrier sense. At this time, in a case where the status management information of all other wireless signal processing units is content indicating the completion of the CA procedure, the transmission timing adjustment unit 160 notifies all other wireless signal processing units of the transmission instruction as the transmission control information. In a case where the status management information of at least one other wireless signal processing unit is content indicating that the CA procedure is being executed, the transmission timing adjustment unit 160 does not execute processing related to the status management information of other wireless signal processing units.

As described above, the transmission timing adjustment unit 160 adjusts the data transmission timing of the wireless signal processing units 130, 140, and 150 by notifying each wireless signal processing unit of the transmission control information on the basis of a predetermined condition. Even in a case where the data transmission timing of the wireless signal processing units 130, 140, and 150 is appropriately adjusted in this way, the time required to transmit data from each of the wireless signal processing units 130, 140, and 150 may differ. In this case, for example, the occurrence of power leakage between a plurality of links disables ACK not to be received on the link corresponding to the wireless signal processing unit 140 when data is transmitted on the link corresponding to the wireless signal processing unit 130. As will be described below, in the present embodiment, the transmission timing adjustment unit 160 executes a process of adjusting the reply timing of ACK from the receiving station to thereby appropriately adjust the reply timing of ACK from the receiving station to the transmitting station.

The transmission timing adjustment unit 160 notifies each of the wireless signal processing units 130, 140, and 150 of the reply timing of ACK common to the wireless signal processing units 130, 140, and 150 on the basis of the maximum value of the time required for each of the wireless signal processing units 130, 140, and 150 to transmit data, as a process of adjusting the reply timing of ACK from the receiving station. That is, the reply timing is equal to or greater than the maximum value of the time required for the wireless signal processing units 130, 140, and 150 to transmit data. Each of the wireless signal processing units 130, 140, and 150 stores, for example, the aforementioned ACK reply timing in the MAC header and transmits data to the receiving station. The wireless signal processing unit of the receiving station transmits an ACK to the transmitting station in accordance with the ACK reply timing of the received MAC header. Meanwhile, when the ACK reply timing is adjusted as described above, and the adjusted reply timing exceeds the ACK reception deadline, the wireless signal processing unit of the transmitting station can postpone the ACK reception deadline. For example, the wireless signal processing unit of the transmitting station sets the ACK reception deadline in consideration of a period equivalent to the maximum value of the time required to transmit data.

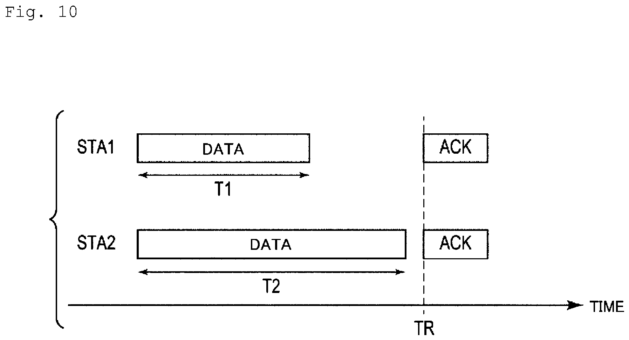

In an example shown in Fig. 10, the data transmission time T1 of the STA function STA1 is shorter than the data transmission time T2 of the STA function STA2. In this way, the transmission timing adjustment unit 160 sets a value passing T2 or more from the start of data transmission as a reply timing TR of ACK common to the STA function STA1 and the STA function STA2. The transmission timing adjustment unit 160 then notifies the STA functions STA1 and STA2 of the ACK reply timing TR. In the STA functions STA1 and STA2, the transmitting station stores the ACK reply timing TR in the MAC header and transmits it to the receiving station, and the receiving station transmits an ACK to the transmitting station when the ACK reply timing TR comes.

The transmission timing adjustment unit 160 notifies of a timing at which a block ACK request (BAR) is transmitted from each of the wireless signal processing units 130, 140, and 150 as an adjustment process different from that described above for the ACK reply timing from the receiving station. The BAR is used by the transmitting station to request acknowledgment of a normally received frame from the receiving station. Each of the wireless signal processing units 130, 140, and 150 transmits the BAR to the receiving station in accordance with the BAR transmission timing notified of by the transmission timing adjustment unit 160. The receiving station receives the BAR and then transmits a response to the transmitting station through a block ACK. At this time, the BAR is created by each of the wireless signal processing units 130, 140, and 150.

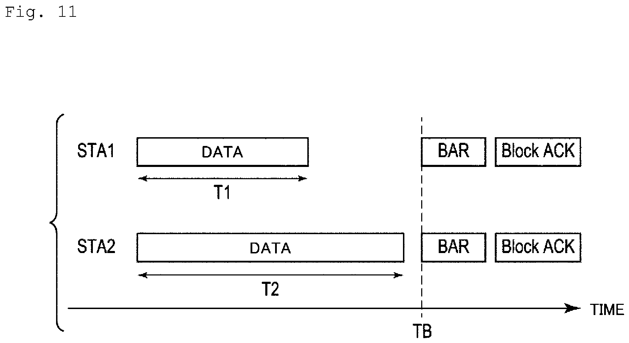

In an example shown in Fig. 11, the transmission timing adjustment unit 160 notifies the STA functions STA1 and STA2 of the transmitting station of a BAR transmission timing TB. The transmission timing TB is a timing after at least the STA functions STA1 and STA2 complete the transmission of data. In the STA functions STA1 and STA2, the transmitting station transmits BAR to the receiving station at the transmission timing TB, and the receiving station transmits a block ACK to the transmitting station for the BAR.

The transmission timing adjustment unit 160 notifies of a transmission completion timing TF at which the transmission of data is completed from each of the wireless signal processing units 130, 140, and 150 as an adjustment process different from that described above for the ACK reply timing from the receiving station. The transmission completion timing TF is set on the basis of the time required to transmit data from each of the wireless signal processing units 130, 140, and 150. Each of the wireless signal processing units 130, 140, and 150 adds, for example, dummy data for which the transmission of data is completed at the transmission completion timing TF notified of by the transmission timing adjustment unit 160. In this way, the addition of dummy data is executed by the wireless signal processing unit that completes transmission at a timing earlier than the transmission completion timing TF. In each of the wireless signal processing units 130, 140, and 150, when data is transmitted to the receiving station, the transmission of data is completed at the transmission completion timing TF. The receiving station transmits an ACK to the transmitting station after the reception of data is completed.

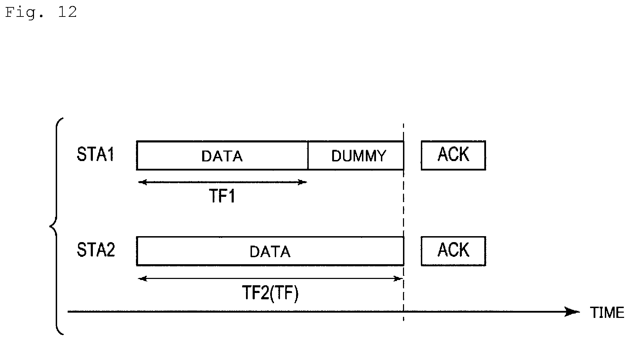

In an example shown in Fig. 12, the transmission timing adjustment unit 160 notifies the STA functions STA1 and STA2 of the transmission completion timing TF of data. In this example, since the transmission completion timing TF1 of the STA function STA1 is earlier than the transmission completion timing TF which has been notified of, the STA function STA1 sets the data transmission completion timing to TF by adding dummy data to the data. On the other hand, since the transmission completion timing TF2 of the STA function STA2 matches the transmission completion timing TF which has been notified of, the STA function STA2 does not add dummy data to the data. In the transmitting station, the STA function STA1 transmits data to which dummy data is added, and the STA function STA2 transmits data to which no dummy data is added. In the receiving station, the STA functions STA1 and STA2 receive data and then transmit an ACK to the transmitting station.

Meanwhile, the transmission timing adjustment unit 160 can set the maximum value of time required to transmit the above-described data, for example, by each wireless signal processing unit notifying the transmission timing adjustment unit 160 of the scheduled data transmission timing and the data transmission end timing at the start of channel access. Each wireless signal processing unit notifies the transmission timing adjustment unit 160 of the scheduled data transmission timing and the data transmission end timing on the basis of the scheduled data transmission timing and the data transmission end timing having been updated. This allows the transmission timing adjustment unit 160 to notify each wireless signal processing unit of the latest maximum value of the time required to transmit data. Therefore, each wireless signal processing unit transmits the above-described ACK reply timing and the like to the receiving station on the basis of the latest maximum value of the time required to transmit data.

As described above, in the present embodiment, the transmission timing adjustment unit 160 adjusts transmission timings of first data associated with the first wireless signal processing unit and second data associated with the second wireless signal processing unit on the basis of a first status associated with the first wireless signal processing unit and a second status associated with the second wireless signal processing unit. Thereby, in a case where both the first wireless signal processing unit and the second wireless signal processing unit attempt to transmit data, the transmitting station of the present embodiment can avoid the influence of power leakage and appropriately transmit and receive data by appropriately adjusting the data transmission timing even if there is power leakage between the wireless signal processing units.

In the present embodiment, the transmission timing adjustment unit 160 manages the status of the channel access procedure of the first wireless signal processing unit (first status) and the status of the channel access procedure of the second wireless signal processing unit (second status). This allows the transmission timing adjustment unit 160 to appropriately adjust the data transmission timing on the basis of the first status and the second status.

In the present embodiment, the transmission timing adjustment unit 160 confirms the second status in a case where the first status is a status indicating the completion of the channel access procedure. This makes it possible to execute processing correspond to the status of the second wireless signal processing unit in a case where the first wireless signal processing unit attempts to transmit data. In this way, in the transmission timing adjustment unit 160, the execution of unnecessary operations is suppressed by limiting the execution of the operation of confirming the second status.

In the present embodiment, the transmission timing adjustment unit 160 notifies the first wireless signal processing unit of an instruction to wait for transmission of data in a case where the first status is a status indicating the completion of the channel access procedure and the second status is a status indicating that the channel access procedure is being executed. Thereby, even in a case where the first wireless signal processing unit and the second wireless signal processing unit are undergoing power leakage, it is possible to detect that other wireless signal processing units attempt to transmit data and to align the transmission timings of the wireless signal processing units.

In the present embodiment, the transmission timing adjustment unit 160 notifies the first wireless signal processing unit and the second wireless signal processing unit of an instruction to transmit data in a case where the first status is a status indicating the completion of the channel access procedure and the second status is a status indicating the completion of the channel access procedure. This allows the first wireless signal processing unit and the second wireless signal processing unit to transmit data at appropriate timings. By adjusting the data transmission timing in this way, for example, a situation in which the second wireless signal processing unit cannot receive an ACK while the first wireless signal processing unit is transmitting data can be avoided in advance.

In the present embodiment, the transmission timing adjustment unit 160 notifies the first wireless signal processing unit and the second wireless signal processing unit of either the same ACK reply timing, a BAR reply timing, or a data transmission completion timing on the basis of a maximum value of time required for the first wireless signal processing unit and the second wireless signal processing unit to transmit data. This allows communication between the transmitting station and the receiving station to be appropriately executed even in a case where the transmission times of data transmitted from the first wireless signal processing unit and the second wireless signal processing unit are different from each other. For example, a situation in which the second wireless signal processing unit cannot receive an ACK while the first wireless signal processing unit is transmitting data can be avoided in advance.

In the present embodiment, in the receiving station, the first wireless signal processing unit and the second wireless signal processing unit return an ACK to the transmitting station on the basis of the ACK reply timing instruction received from the transmitting station that transmits a wireless signal. This allows the receiving station to return an ACK to the transmitting station, for example, at a timing that does not overlap the data transmission timing of the transmitting station.

### [Modification example 1]

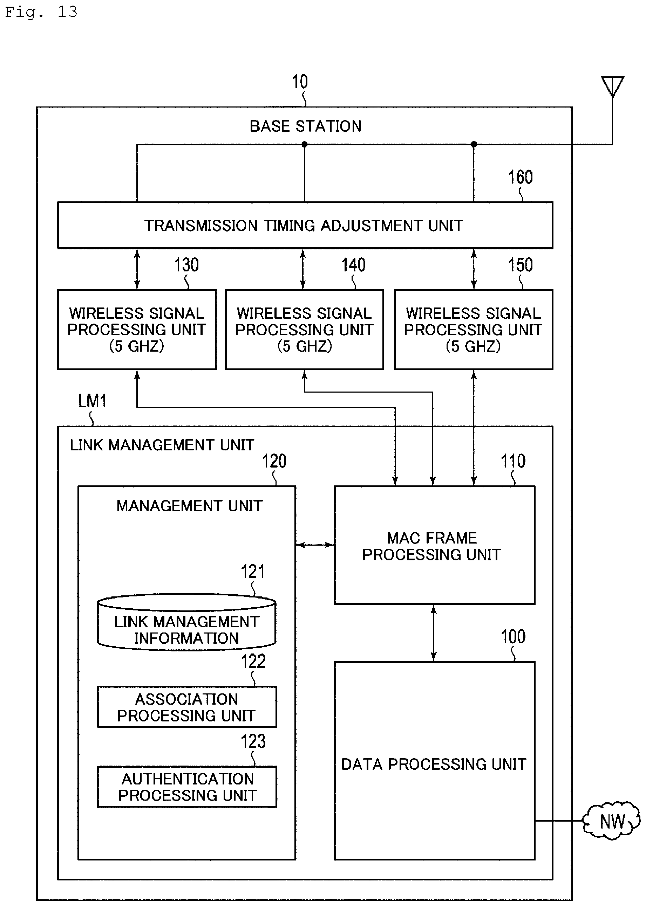

Modification examples of the embodiment will be described below. Fig. 13 is a diagram illustrating a modification example of a functional configuration of the base station. As shown in Fig. 13, the transmission timing adjustment unit 160 included in the base station 10 may receive data to be transmitted from each of the wireless signal processing units 130, 140, and 150. In this case, since the transmission timing adjustment unit 160 receives data from each wireless signal processing unit, it does not notify each of the wireless signal processing units 130, 140, and 150 of the transmission control information. Instead, the transmission timing adjustment unit 160 reserves the data received from each wireless signal processing unit and transmits the data received from each wireless signal processing unit on the basis of the status of carrier sense notified of by each of the wireless signal processing units 130, 140, and 150. That is, the transmission timing adjustment unit 160 executes transmission of data or waiting for transmission of data by controlling the transmission timing adjustment unit 160 itself on the basis of the transmission control information described in the embodiment.

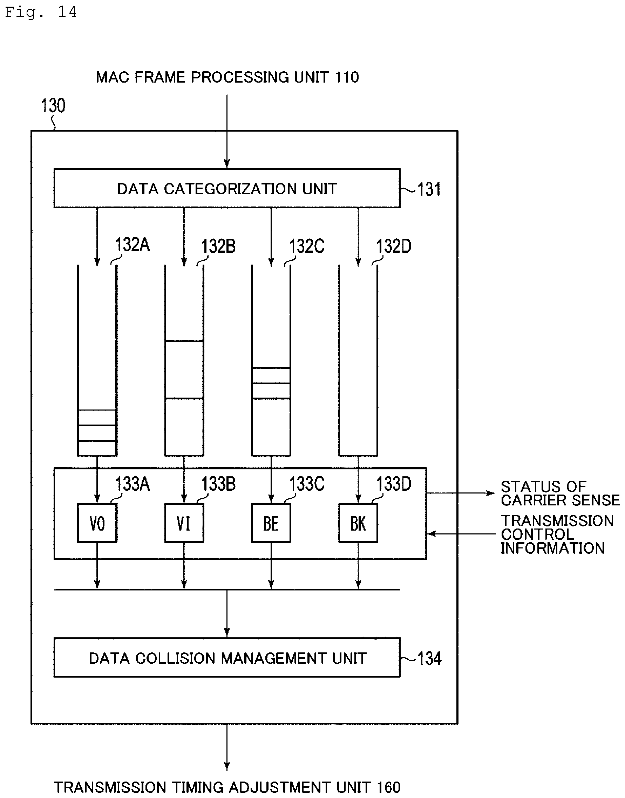

In the case of the present modification example, as shown in Fig. 14, the channel access function of the wireless signal processing unit 130 acquires the transmission right in the same manner as in the above-described embodiment, and then outputs the extracted MAC frame to the transmission timing adjustment unit 160. In the present modification example, the channel access functions of the wireless signal processing units 140 and 150 are the same as the channel access function of the wireless signal processing unit 130. Therefore, the transmission timing adjustment unit 160 cooperates with the STA functions of the wireless signal processing units 130, 140, and 150 to generate a wireless signal on the basis of the input MAC frame. The transmission timing adjustment unit 160 then transmits the wireless signal on the basis of the status of carrier sense of each wireless signal processing unit.

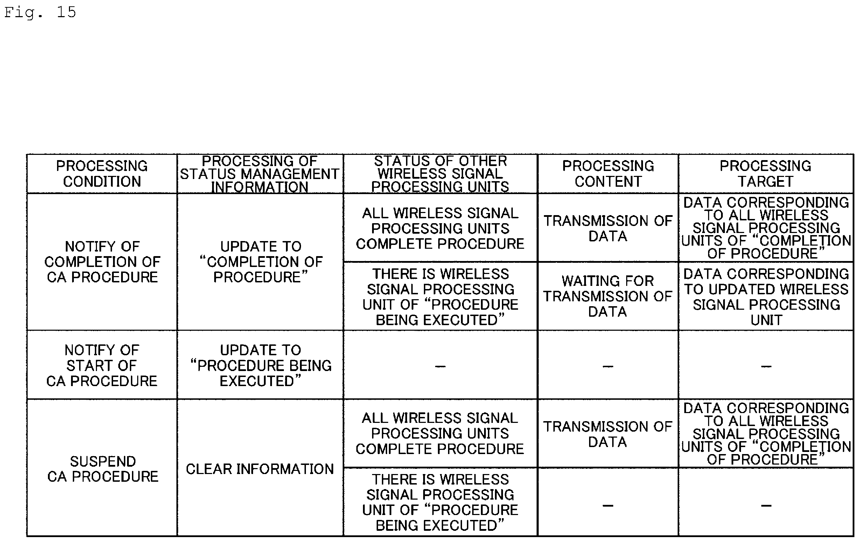

Fig. 15 is a table showing an example of a process of transmitting a wireless signal in the wireless system according to the present modification example. In the present modification example, in a case where the transmission timing adjustment unit 160 is notified of the completion of the channel access (CA) procedure as the status of carrier sense (CS), the transmission timing adjustment unit 160 also confirms the status management information of other wireless signal processing units. At this time, in a case where the status management information of all other wireless signal processing units is content indicating the completion of the CA procedure, the transmission timing adjustment unit 160 transmits data corresponding to all other wireless signal processing units. In a case where the status management information of at least one other wireless signal processing unit is content indicating that the CA procedure is being executed, the transmission timing adjustment unit 160 waits for transmission of data corresponding to the wireless signal processing unit that has updated the status management information. In a case where the transmission timing adjustment unit 160 is notified of the start of the CA procedure as the status of CS, the same processing as in the above-described embodiment is executed. In a case where the transmission timing adjustment unit 160 is notified of the suspension of the CA procedure as the status of CS, the transmission timing adjustment unit 160 clears the status management information of the wireless signal processing unit that has notified of the status of CS. At this time, in a case where the status management information of all other wireless signal processing units is content indicating the completion of the CA procedure, the transmission timing adjustment unit 160 transmits data corresponding to all other wireless signal processing units.

In the present modification example, the transmission timing adjustment unit 160 also adjusts the transmission timings of first data associated with the first wireless signal processing unit and second data associated with the second wireless signal processing unit on the basis of a first status associated with the first wireless signal processing unit and a second status associated with the second wireless signal processing unit. Therefore, the same effects as in the above-described embodiment can be achieved.

### [Modification example 2]

In the above-described embodiment and the like, it is assumed that the base station 10 is a transmitting station that transmits a wireless signal, and the terminal 20 is a receiving station that receives a wireless signal. On the other hand, the technique of the embodiment can also be applied in a situation where the terminal 20 transmits a wireless signal and the base station 10 receives a wireless signal. That is, the relationship between the transmitting station and the receiving station described in the embodiment can be interchanged.

### [Other modification examples]

Each processing according to the above-described embodiment and the like may be stored as a program that can be executed by a CPU such as a computer. In addition, it can be distributed by being stored in a storage medium of an external storage device such as a magnetic disc, an optical disc, or a semiconductor memory. The CPU or the like reads the program stored in the storage medium of this external storage device, and controls an operation using this read program, thereby allowing the above-described processing to be executed.

Meanwhile, the present invention is not limited to the above embodiment, and can be variously modified at the implementation stage without departing from the spirit or scope thereof. In addition, each embodiment may be carried out in combination as appropriate, in which case the combined effect can be obtained. Further, the above embodiment includes various inventions, and various inventions can be extracted by combinations selected from a plurality of disclosed configuration requirements. For example, in a case where the problem can be solved and the effects can be obtained even if some configuration requirements are deleted from all the configuration requirements shown in the embodiment, a configuration from which these configuration requirements are deleted can be extracted as an invention.

### Reference Signs List

1 Wireless system
10 Base station
20 Terminal
30 Server
11, 21 CPU
12, 22 ROM
13, 23 RAM
14, 24 Wireless communication module
15 Wired communication module
25 Display
26 Storage
100, 200 Data processing unit
110, 210 MAC frame processing unit
120, 220 Management unit
121, 221 Link management information
122, 222 Association processing unit
123, 223 Authentication processing unit
130, 140, 150, 230, 240, 250 Wireless signal processing unit
131 Data categorization unit
132A, 132B, 132C, 132D Transmission queue
133A, 133B, 133C, 133D Carrier sense multiple access with collision avoidance (CSMA/CA) execution unit
134 Data collision management unit
160 Transmission timing adjustment unit
LM1, LM2 Link management unit

## Claims

1. A transmitting station comprising:
a first wireless signal processing unit configured to transmit and receive a wireless signal using a first channel;
a second wireless signal processing unit configured to transmit and receive a wireless signal using a second channel different from the first channel; and
a transmission timing adjustment unit configured to adjust transmission timings of first data associated with the first wireless signal processing unit and second data associated with the second wireless signal processing unit,
wherein the transmission timing adjustment unit adjusts the transmission timings of the first data and the second data on the basis of a first status associated with the first wireless signal processing unit and a second status associated with the second wireless signal processing unit.

2. The transmitting station according to claim 1, wherein the first status is a status of a channel access procedure of the first wireless signal processing unit,
the second status is a status of a channel access procedure of the second wireless signal processing unit, and
the transmission timing adjustment unit manages the first status and the second status.

3. The transmitting station according to claim 2, wherein the transmission timing adjustment unit confirms the second status in a case where the first status is a status indicating completion of a channel access procedure.

4. The transmitting station according to claim 3, wherein the transmission timing adjustment unit notifies the first wireless signal processing unit of an instruction to wait for transmission of the first data in a case where the second status is a status indicating that the channel access procedure is being executed.

5. The transmitting station according to claim 3, wherein the transmission timing adjustment unit notifies the first wireless signal processing unit and the second wireless signal processing unit of an instruction to transmit the first data and the second data in a case where the second status is a status indicating completion of the channel access procedure.

6. The transmitting station according to claim 1, wherein the transmission timing adjustment unit receives the first data and the second data and transmits the first data and the second data.

7. The transmitting station according to claim 1, wherein the transmission timing adjustment unit notifies the first wireless signal processing unit and the second wireless signal processing unit of either the same ACK reply timing, a block ACK request (BAR) reply timing, or a data transmission completion timing on the basis of a maximum value of time required for the first wireless signal processing unit and the second wireless signal processing unit to transmit data.

8. A receiving station comprising:
a first wireless signal processing unit configured to transmit and receive a wireless signal using a first channel; and
a second wireless signal processing unit configured to transmit and receive a wireless signal using a second channel different from the first channel,
wherein the first wireless signal processing unit and the second wireless signal processing unit return an ACK to the transmitting station on the basis of an ACK reply timing instruction received from a transmitting station that transmits a wireless signal.
